Europäisches Patentamt

European Patent Office

Office européen des brevets

(11) Publication number: **0 060 834**
**B1**

# EUROPEAN PATENT SPECIFICATION

(45) Date of publication of patent specification: **23.07.86**

(51) Int. Cl.⁴: **F 16 D 3/16**

(21) Application number: **81900838.4**

(22) Date of filing: **26.09.80**

(86) International application number:
**PCT/US80/01255**

(87) International publication number:
**WO 82/01227 15.04.82 Gazette 82/10**

(54) SPHERICAL JOINT WITH FLEXIBLE SEALS.

(43) Date of publication of application:
**29.09.82 Bulletin 82/39**

(45) Publication of the grant of the patent:
**23.07.86 Bulletin 86/30**

(84) Designated Contracting States:
**DE FR GB**

(56) References cited:
**FR-A-2 323 055**
**US-A-2 773 368**
**US-A-3 923 349**
**US-A-4 034 996**
**US-A-4 080 013**
**US-A-4 109 976**
**US-A-4 232 754**

(73) Proprietor: **CATERPILLAR TRACTOR CO.**
**100 Northeast Adams Street**
**Peoria Illinois 61629 (US)**

(72) Inventor: **OLT, Arthur E. Jr.**
**1202 Arthur Street**
**Pekin, IL 61554 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

Spherical joints, wherein a pair of members are connected together for compound movements by a part-spherical bearing having a journal mounted therein, are normally sealed by a pair of annular seal assemblies disposed one on each side of the journal. Sealing of the joint is particularly important in application of the joint to construction vehicles, such as the pivotal joint connecting each end of an equalizer bar to a track roller frame of a track-laying vehicle. During operation of the vehicle in heavy dust-laden environments, the transversely disposed equalizer bar and track roller frame will be subjected to relative rotational movement about a journal pin of the joint and pivotal movement transverse to such rotational movement.

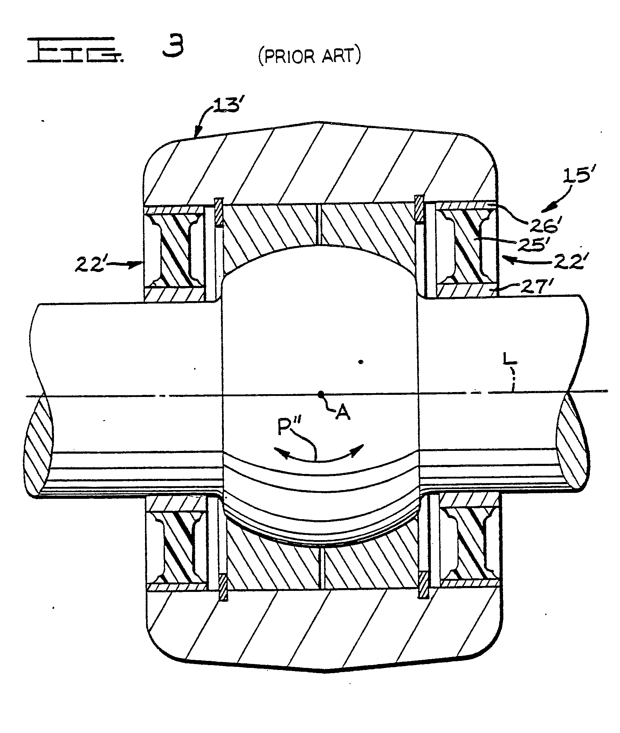

It is during this latter pivotal movement that the seal assemblies are subjected to tensile and compressive forces which tends to curtail the service life of the seal assemblies. Seal assemblies of this type are illustrated in Figure 3 of the drawings with each seal assembly comprising a pair of radially disposed retaining rings having an elastomeric seal compressed therebetween. In addition to being subjected to tensile and compressive forces during pivotal movement P'', the elastomeric seals are subjected to torsional stresses when relative rotational movement occurs between the equalizer bar and track roller frame.

Furthermore, the relatively tall cross-section of the seal tends to make it difficult to incorporate the seal assembly in certain designs wherein space limitations are critical. Also, conventional seal assemblies of this type are expensive to manufacture and install, as well as service, due to their swaged construction and the inability to employ modern manufacturing techniques, such as injection moulding, for the fabrication of the elastomeric seal. Limitations are also placed on the design of the journal since the inner retaining ring of the seal assembly is press-fitted onto the pin. The rather severe operating forces imposed on the elastomeric seal further dictate the need for a relatively soft elastomeric composition for the seal, such as Neoprene, which must be precompressed to enable the seal assembly to counteract high stresses imposed thereon.

Similar problems arise with the compound pivotal joint between a member and a pin as disclosed in FR—A—2323055. In this arrangement elastomeric parts of the seal assemblies are still distorted during relative motion between the part-spherical surfaces of the joint, and no provision is made to enable the seal assemblies to rotate relatively to the pin.

These problems are partially overcome in the joints disclosed in US—A—4109976, and US—A—4080013. In these arrangements, each seal assembly comprises an elastomeric ring having a body portion which flares radially outwardly in the axial direction along the pin away from the spherical bearing whereby upon relative movement of the bearing and journal about an axis perpendicular to the axis of the pin, the elastomeric ring flexes rather than is subjected to compressional stretching. However, the seal assemblies are provided not between the first member and the pin but between the first member and the journal so that the problems of sealing against the pin and providing relative rotation between the seal assembly and pin are not considered.

US—A—4034996 discloses a compound pivotal joint of the kind, hereinafter referred to as of the kind described, comprising a bearing mounted in the first member; a journal mounted in the bearing and on the pin, the bearing and journal having mating part-spherical surfaces providing a spherical joint between the bearing and journal, and the pin being mounted with the journal with its axis intersecting the centre of the spherical joint; a pair of annular seal assemblies spaced apart in the axial direction of the pin one on each side of the spherical joint and providing a seal between the first member and the pin; wherein each seal assembly comprises an elastomeric ring having a main body portion, which flares radially outwardly in the axial direction along the pin away from the spherical bearing whereby upon relative movement of the bearing and journal about an axis perpendicular to the axis of the pin, the elastomeric ring flexes, rather than is subjected to compression or stretching; and an outer ring for securing the radially outer portion of the elastomeric ring to the first member. However, in the particular construction disclosed, the radially inner portion of the main body of the seal is compressed around the pin by garter springs and this inevitably causes drag and undesirable distortion of the main body upon relative rotation between the pin and elastomeric ring.

In accordance with the present invention, a compound pivotal joint of the kind described is characterised in that the elastomeric ring carries both an inner ring mounted on and pivotal around the pin at a radially inner portion of the elastomeric ring, and a lip seal sealing against the pin alongside the inner ring.

The improved seal assembly thus provides the spherical joint with a long service life, substantially reduces the overall cost thereof in comparison to conventional joints employing standard seal assemblies therein, and provides a highly serviceable seal assembly which satisfies minimum space requirements. In particular, the inner ring ensures free rotation between the elastomeric ring and the pin, the lip seal ensures a proper seal with the pin, and the inner ring, being adjacent to the lip seal, accommodates different spring rates between the seal main body and lip seal.

The invention will now be described by way of example with reference to the accompanying drawings wherein:—

Figure 1 is a partially sectioned front elevational view of a track-laying vehicle having each end of an equalizer bar pivotally connected to a track roller frame by a compound joint in accordance with the present invention;

Figure 2 is an enlarged sectional view through the joint, taken on the line II—II in Figure 1; and,

Figure 3 is a view similar to Figure 2, but illustrates a conventional spherical joint.

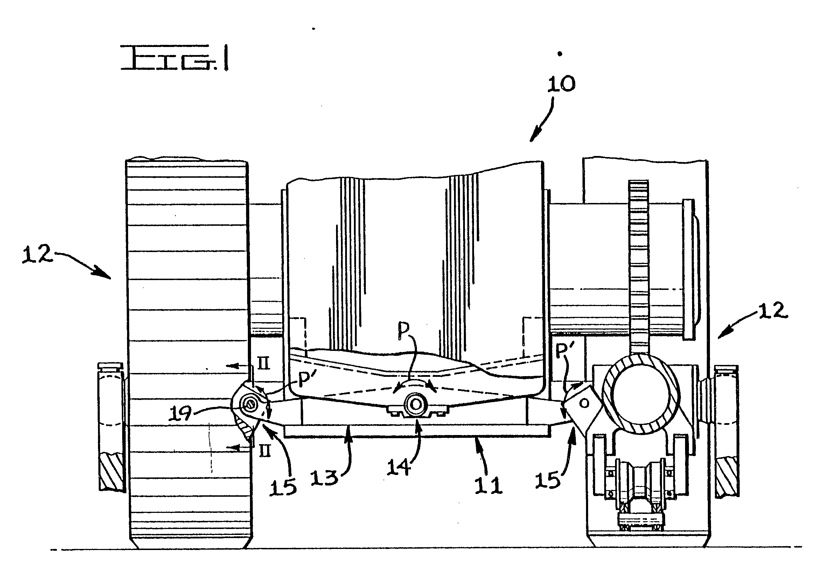

Figure 1 illustrates a track-laying vehicle 10, such as a tractor, having a main frame 11 and a pair of laterally spaced track roller frames 12 mounted on either side of the main frame in a conventional manner. Forward ends of track roller frames 12 are pivotally connected to main frame 11 by a laterally extending equalizer bar 13, pivotally connected to the main frame by a standard pivot connection 14. A spherical joint 15, embodying this invention, pivotally connects each lateral end of equalizer bar 13 to a respective track roller frame 12.

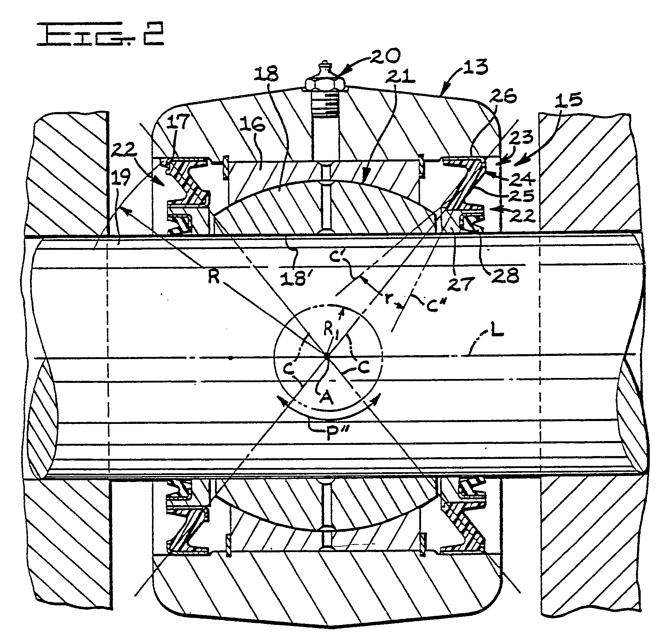

Referring to Figure 1, during operation of tractor 10, equalizer bar 13 will pivot about pivot joint 14, as indicated by arrow P. Simultaneously therewith, relative pivotal movement P' will normally occur as between each track roller frame 12 and equalizer bar 13. Furthermore and referring to Figure 2, joint 15 will be also subjected to pivotal movement P'', about a pivotal axis A of the joint. Vehicles of this type operate in heavily dust-laden environments, thus requiring that joint 15 be fully sealed to prevent abrasion and potential damage to the bearing surfaces thereof.

Referring to Figure 2, each joint 15 includes an annular bearing 16 secured within a through bore 17, formed through equalizer bar or first member 13. A journal 18 is mounted in bearing 16 and is further mounted on a journal pin or second member 19. A standard grease fitting 20 and appropriate intercommunicating passages may be formed in joint 15, as shown, to continuously lubricate mating, semi-spherical bearing surfaces 21 of bearing 16 and surface 18' of journal 18.

A pair of annular seal assemblies 22 are mounted between equalizer bar 13 and pin 19 on each side of bearing 16 and journal 18 to continuously seal joint 15 during operation thereof. Each seal assembly 22 includes means 23 for permitting flexing of seal assembly 22 to at least substantially prevent stretching or compression thereof in response to relative pivotal movement P'' (Figure 2), between equalizer bar 13 and pin 19.

Means 23 includes a flexible member 24, shown as preferably having a generally Z-shaped cross section in Figure 2. A frusto-conically shaped main body portion 25 of member 24 at least substantially lies in a conical plane C, having its apex at pivot point A of spherical joint 15 which intersects a longitudinal axis L of journal pin 19. It can be seen in Figure 2 that this construction and arrangement will induce flexing of carrier 24 and, thus, seal assembly 22, rather than any tensioning or compression thereof.

Member 24 proper may be composed of a flexible elastomeric material, such as a relatively tough urethane compound, (e.g., as sold under the trade mark "Hytrel") which will exhibit a prolonged service life. The outside diameter of a main body portion 25 of member 24 may be bonded or otherwise suitably secured to an annular ring 26 which is press-fitted or otherwise suitably secured within a counterbore of bore 17. The inside diameter of member 24 may be secured on the periphery of an annular ring 27 which carries an annular lip seal 28 on an outboard side thereof. It should be noted in Figure 2 that main body portion 25 extends radially inwardly from an outboard end of the seal assembly to an inboard end thereof.

In addition to providing a mounting for lip seal 28, ring 27 functions as a load transfer member which accommodates the difference in spring rates between main body portion 25 and lip seal 28. Forces developed by the flexing of main body portion 25 are transferred to shaft 19 by-passing lip seal 28, so as not to affect its sealing capabilities.

Small running clearances are preferably provided between the inside diameters of journal 18 and ring 27 and pin 19 to allow a slide-in and slide-out pin design facilitating assembly and disassembly for servicing purposes. This construction and arrangement further facilitates relative rotational motion between pin 19 and equalizer bar 13 about longitudinal axis L of the pin. Member 24 is thus free from any torsional stresses which would be otherwise imposed thereon.

In order to induce the desired flexing in seal assembly 22, it has been determined that a radius R, subscribing a circle centered at pivot point A and intersecting the outside diameters of seal assemblies 22, is desirably greater than approximately ten times a radius $R_1$, subscribing a circle centered at pivot point A and indicating variance of the pivot point relative to C and within the latter circle. An alternative, preferable design parameter to achieve the desired flexing desiderata is one of varying the cone angle ±10° relative to the opening "O" angle wherein conical plane C, containing the major axis of body portion 25, intersects pivot point A. This variance is depicted in Figure 2 by angle r, between conical planes C' and C''.

If the variance is more than the preferred amount described above, the seal material may become subjected to undesirable stretching and/or compression, rather than flexing, to potentially cause premature seal failure. It should be noted that the "hinge action" thus provided by the flexing of seal assembly 22 will allow the shape thereof to change without causing undesirable distortion. This desiderata may be contrasted with the hereinafter described distortion imparted to the prior art seal assembly 22' of Figure 3 upon operation thereof.

Industrial Applicability

Spherical joint 15 finds particular application to the type of environment illustrated in Figure 1; namely, the pivotal connection between each end of equalizer bar 13 and a respective track roller frame 12. Upon relative pivoting P' between a track roller frame 12 and equalizer bar 13 (Figure 1), seal assembly 22 will remain in a stress-free condition of operation since no torsional loads will be placed thereon. In particular and referring to Figure 2, such relative pivotal movement between equalizer bar 13 and pin 19 will occur between journal 18 and pin 19 and/or between bearing surfaces 21 of the journal and bearing 16. Since ring 27 is suitably clearanced to rotate relative to pin 19, no torsional stresses will be placed on carrier 24.

Still referring to Figure 2, when relative pivoting P'' occurs, as between equalizer bar 13 and pin 19, such pivoting will occur at mating bearing surfaces 21 of bearing 16 and journal 18. During this pivoting, carrier 24 as well as lip seal 28 will be at least substantially retained in a stress-free condition of operation since major body portion 25 of the carrier will flex rather than be placed in compression or tension. This advantageous flexing of seal assemblies 22 is primarily occasioned due to the disposition of body portion 25 of each carrier 24 in a conical plane C' having its focus at or approximately at pivot point A.

In contrast thereto, Figure 3 illustrates a standard spherical joint 15' wherein a pair of laterally spaced seal assemblies 22' are subjected to tensile stresses and compressive loads upon relative pivotal movement P'', between an equalizer bar 13' and a pin 19'. Furthermore, upon relative rotation between equalizer bar 13 and pin 19 about longitudinal axis L of the pin, elastomeric body portion 25' of each seal assembly 22' will be subjected to torsional stresses, which could affect the desired service life of the seal assemblies.

## Claims

1. A compound pivotal joint (15) between a first member (13) and a pin (19), the joint comprising a bearing (16) mounted in the first member (13); a journal (18) mounted in the bearing (16) and on the pin (19), the bearing and journal having mating part-spherical surfaces (21) providing a spherical joint between the bearing and journal, and the pin being mounted with the journal with its axis (L) intersecting the centre (A) of the spherical joint; a pair of annular seal assemblies (22) spaced apart in the axial direction of the pin one on each side of the spherical joint and providing a seal between the first member and the pin; wherein each seal assembly comprises an elastomeric ring (24) having a main body portion (25), which flares radially outwardly in the axial direction along the pin away from the spherical bearing whereby upon relative movement of the bearing and journal about an axis perpendicular to the axis of the pin, the elastomeric ring flexes rather than is subjected to compression or stretching; and an outer ring (26) for securing the radially outer portion of the elastomeric ring to the first member; characterised in that the elastomeric ring carries both an inner ring (27) mounted on and pivotal around the pin at a radially inner portion of the elastomeric ring, and a lip seal (28) sealing against the pin alongside the inner ring.

2. A joint according to claim 1, wherein the elastomeric ring (24) has a Z-shaped cross-section.

3. A joint according to claim 1 or claim 2, wherein the lip seal (28) is mounted on the inner ring (27).

4. A joint according to any one of the preceding claims, wherein the pin (19) is pivotally mounted about its axis relatively to the journal (18).

5. A joint according to any one of the preceding claims, wherein the member (13) comprises an equalizer bar of a track-laying vehicle (10), and wherein the pin (19) connects each end of the equalizer bar (13) to a track roller frame (12) of the vehicle.

## Patentansprüche

1. Eine zusammengesetzte Schwenkverbindung (15) zwischen einem ersten Glied (13) und einem Stift (19), wobei die Verbindung folgendes aufweist: ein im ersten Glied (13) angeordnetes Lager (16), im Lager (16) und auf dem Stift (19) angeordnete Lagermittel (18), wobei das Lager und die Lagermittel zusammenpassende teilkugelförmige Oberflächen (21) aufweisen, die eine kugelförmige Verbindung zwischen dem Lager und den Lagermitteln vorsehen, und wobei der Stift mit den Lagermitteln mit seiner Achse (L) die Mitte (A) der sphärischen Verbindung schneidend angeordnet ist, ein Paar von Ringdichtanordnungen (22) in Axialrichtung des Stiftes mit Abstand angeordnet, und zwar eine auf jeder Seite der sphärischen Verbindung und eine Dichtung vorsehend zwischen dem ersten Glied und dem Stift, wobei jede Dichtungsanordnung einen Elastomerring (24) aufweist mit einem Hauptkörperteil (25), der sich radial nach außen in Axialrichtung entlang des Stiftes weg von dem sphärischen Lager erweitert, wodurch bei relativer Bewegung des Lagers und der Lagermittel um eine Achse senkrecht zur Stiftachse der elastomere Ring sich biegt und nicht einer Zusammendrückung oder Dehnung ausgesetzt ist, und einen äußeren Ring (26) zur Befestigung des radial äußeren Teils des Elastomerrings an dem ersten Glied, dadurch gekennzeichnet, daß der Elastomerring sowohl einen inneren Ring (27) befestigt an und schwenkbar um den Stift an einem radial inneren Teil des Elastomerrings trägt und eine Lippendichtung (28), die gegenüber dem Stift längs des Innenrings abdichtet.

2. Verbindung nach Anspruch 1, wobei der Elastomerring (24) einen Z-förmigen Querschnitt besitzt.

3. Verbindung nach Anspruch 1 oder 2, wobei die Lippendichtung (28) auf dem Innenring (27) angeordnet ist.

4. Verbindung nach einem der vorhergehenden Ansprüche, wobei der Stift (19) schwenkbar um seine Achse bezüglich der Lagermittel (18) angeordnet ist.

5. Verbindung nach einem der vorhergehenden Ansprüche, wobei das Glied (13) eine Ausgleichsstange eines Kettenfahrzeugs (10) aufweist, und wobei der Stift (19) jedes Ende der Ausgleichsstange (13) mit einem Kettenrollenrahmen (12) des Fahrzeugs verbindet.

## Revendications

1. Articulation pivotante composite (15) entre un premier élément (13) et une cheville (19) l'articulation comprenant un support (16) monté dans le premier élément (13), un coussinet (18) monté dans le support (16) et sur la cheville (19), le support et le coussinet ayant des surfaces complémentaires en partie sphériques (21) constituant une articulation sphérique entre le support et le coussinet, et la cheville étant montée avec le coussinet, son axe (L) coupant le centre (A) de l'articulation sphérique; deux joints annulaires (22) espacés dans le sens axial de la cheville, un de chaque côté de l'articulation sphérique et constituant un joint entre le premier élément et la cheville, dans laquelle chaque joint comporte une bague en élastomère (24) comportant une partie formant corps principal (25) s'évasant radialement vers l'extérieur dans le sens axial le long de la cheville, en s'éloignant du support sphérique, la bague en élastomère fléchissant sans être soumise à une compression ou à un allongement en case de mouvement relatif du support et du coussinet autour d'un axe perpendiculaire à l'axe de la cheville, et une bague externe (26) destinée à appliquer la partie externe radiale de la bague en élastomère au premier élément, caractérisée en ce que la bague en élastomère porte à la fois un anneau interne (27) monté sur la cheville et pivotant autour de celle-ci au niveau d'une partie interne radiale de la bague en élastomère, et un joint à lèvre (28) assurant l'étanchéité contre la cheville le long de la bague interne.

2. Articulation selon la revendication 1, dans laquelle la bague en élastomère (24) a une section transversale en forme de Z.

3. Articulation selon la revendication 1 ou 2, dans laquelle le joint à lèvre (28) est monté sur la bague interne (27).

4. Articulation selon l'une quelconque des revendications précédentes, dans laquelle la cheville (19) est montée à pivotement sur son axe par rapport au coussinet (18).

5. Articulation selon l'une quelconque des revendications précédentes dans laquelle l'élément (13) comporte une barre de compensation d'un vèhicule (10) à chemins de roulement et dans laquelle la cheville (19) relie chaque extrémité de la barre de compensation (13) à un châssis à galet de chemin de roulement (12) du véhicule.

FIG.1

FIG. 2

FIG. 3 (PRIOR ART)